# EUROPEAN PATENT SPECIFICATION

(11) **EP 3 398 858 B1**
(45) Date of publication and mention of the grant of the patent: **30.03.2022**
(21) Application number: 16881768.2
(22) Date of filing: 27.12.2016
(51) Int. Cl.: B64G 1/40, B29C 70/16, C23C 18/31, C23C 18/32, C25D 5/56, C25D 7/00, B29L 22/00, C25D 7/04, C23C 18/16, C23C 18/18, C23C 18/20, C25D 5/00, C25D 5/52

(54) **SPACECRAFT FUEL TANK AND MANUFACTURING METHOD THEREFOR**
KRAFTSTOFFTANK FÜR RAUMFAHRZEUG UND HERSTELLUNGSVERFAHREN DAFÜR
RÉSERVOIR DE CARBURANT D'ENGIN SPATIAL ET SON PROCÉDÉ DE FABRICATION

(30) Priority: 28.12.2015 JP 2015256349
(43) Date of publication of application: 07.11.2018
(73) Proprietor: Kawasaki Jukogyo Kabushiki Kaisha, Kobe-shi, Hyogo 650-8670 (JP)
(72) Inventor: CHIKU, Naruhiko, Kobe-shi, Hyogo 650-8670 (JP); MARUYAMA, Tatsuya, Kobe-shi, Hyogo 650-8670 (JP)
(74) Representative: Leinweber & Zimmermann
(86) International application number: PCT/JP2016/088897
(87) International publication number: WO 2017/115794

(56) References cited:
- JP-A- H0 780 973
- JP-A- 2002 139 197
- JP-A- 2002 139 197
- JP-A- 2003 184 743
- JP-A- 2010 247 719
- US-A- 4 761 206
- US-A1- 2015 048 209

## Description

### Technical Field

The present invention relates to a fuel tank for use with a spacecraft (fuel tank for spacecraft), and a manufacturing method thereof.

### Background Art

To reduce the weight of a pressure container (pressure vessel) mounted in an aerospace vehicle (payload) in which an artificial satellite or the like is mounted, a manufacturing method of a composite pressure container (vessel) is known, in which the thickness of a metal layer is reduced (e.g., see Patent Literature 1). In the manufacturing method of the composite pressure container disclosed in Patent Literature 1, the weight of the pressure container for storing helium therein is reduced.

### Citation List

### Patent Literature

Patent Literature 1: Japanese Laid-Open Patent Application Publication No. 2002-139197

### Summary of Invention

### Technical Problem

However, in the composite pressure container disclosed in the above-described Patent Literature 1, there is a room for improvement in reduction of the weight of the pressure container.

In the manufacturing method of the composite pressure container disclosed in the above-described Patent Literature 1, consideration is not given to a case where liquid oxygen is stored in the manufactured composite pressure container. Therefore, there is a room for improvement in resistance to ignition in a liquid oxygen ambience.

An object of the present invention is to provide a fuel tank for use with a spacecraft, and a manufacturing method thereof, which can solve at least one of the above-described two problems.

### Solution to Problem

According to the present invention, there is provided a fuel tank for use with a spacecraft, the fuel tank being configured to store therein fuel for driving the spacecraft, the fuel tank comprising: a carbon fiber reinforced plastic layer and a metallic plating layer, wherein the carbon fiber reinforced plastic layer has a polished surface having been subjected to polishing processing, the polished surface being on an inner side of the fuel tank, wherein the metallic plating layer is provided on the polished surface, and wherein the polishing processing is performed by use of a polishing instrument with a count of 200 to 2000.

In this configuration, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a fuel tank for use with a spacecraft, the fuel tank being configured to store therein fuel for driving the spacecraft, the fuel tank comprising: a carbon fiber reinforced plastic layer and a metallic plating layer, wherein the carbon fiber reinforced plastic layer has a polished surface having been subjected to polishing processing, the polished surface being on an inner side of the fuel tank, wherein the metallic plating layer is provided on an outer side of the fuel tank, and wherein the polishing processing is performed by use of a polishing instrument with a count of 200 to 2000.

In this configuration, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a fuel tank for use with a spacecraft, the fuel tank being configured to store therein fuel for driving the spacecraft, the fuel tank comprising: a carbon fiber reinforced plastic layer and metallic plating layers, wherein the carbon fiber reinforced plastic layer has a polished surface having been subjected to polishing processing, the polished surface being on an inner side of the fuel tank, wherein the metallic plating layers are provided on the polished surface and on a surface of the carbon fiber reinforced plastic layer, the surface being an outer side of the fuel tank, and wherein the polishing processing is performed by use of a polishing instrument with a count of 200 to 2000.

In this configuration, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a fuel tank for use with a spacecraft, the fuel tank being configured to store therein fuel for driving the spacecraft, the fuel tank comprising: a carbon fiber reinforced plastic layer; and a metallic plating layer covering a surface of the carbon fiber reinforced plastic layer, the surface being on an inner side of the fuel tank, wherein the metallic plating layer has a polished surface having been subjected to polishing processing, the polished surface being on the inner side of the fuel tank, and wherein the polishing processing is performed by use of a polishing instrument with a count of 200 to 2000.

In this configuration, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a fuel tank for use with a spacecraft, the fuel tank being configured to store therein fuel for driving the spacecraft, the fuel tank comprising: a carbon fiber reinforced plastic layer; a metallic plating layer covering a surface of the carbon fiber reinforced plastic layer, the surface being on an inner side of the fuel tank, and a metallic plating layer covering a surface of the carbon fiber reinforced plastic layer, the surface being on an outer side of the fuel tank, wherein the metallic plating layer covering the surface of the carbon fiber reinforced plastic layer, the surface being on the inner side of the fuel tank has a polished surface having been subjected to polishing processing, and wherein the polishing processing is performed by use of a polishing instrument with a count of 200 to 2000.

In this configuration, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a method of manufacturing a fuel tank for use with a spacecraft, the fuel tank including a carbon fiber reinforced plastic layer, the method comprising: (A) performing polishing processing to a surface of the carbon fiber reinforced plastic layer using a polishing instrument with a count of 200 to 2000; (B) forming a metallic plating layer on the surface of the carbon fiber reinforced plastic layer, the surface having been subjected to the polishing processing, after (A); and (C) manufacturing the fuel tank for use with the spacecraft by placing the carbon fiber reinforced plastic layer so that the metallic plating layer is located on an inner side of the fuel tank, after (B).

In this method, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a method of manufacturing a fuel tank for use with a spacecraft, the fuel tank including a carbon fiber reinforced plastic layer, the method comprising: (A) performing polishing processing to a surface of the carbon fiber reinforced plastic layer using a polishing instrument with a count of 200 to 2000; (B1) forming a metallic plating layer on a surface of the carbon fiber reinforced plastic layer, the surface being on a side opposite to the surface having been subjected to the polishing processing, after (A), and (C1) manufacturing the fuel tank for use with the spacecraft by placing the carbon fiber reinforced plastic layer so that the metallic plating layer is located on an outer side of the fuel tank, after (B1).

In this method, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a method of manufacturing a fuel tank for use with a spacecraft, the fuel tank including a carbon fiber reinforced plastic layer, the method comprising: (A) performing polishing processing to a surface of the carbon fiber reinforced plastic layer using a polishing instrument with a count of 200 to 2000; (B2) forming metallic plating layers on the surface of the carbon fiber reinforced plastic layer, the surface having been subjected to the polishing processing, and a surface of the carbon fiber reinforced plastic layer, the surface being on a side opposite to the surface having been subjected to the polishing processing, after (A), and (C2) manufacturing the fuel tank for use with the spacecraft by placing the carbon fiber reinforced plastic layer so that the metallic plating layer formed on the surface of the carbon fiber reinforced plastic layer, the surface having been subjected to the polishing processing, is located on an inner side of the fuel tank, after (B2).

In this method, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a method of manufacturing a fuel tank for use with a spacecraft, the fuel tank including a carbon fiber reinforced plastic layer, the method comprising: (D) forming a metallic plating layer on a surface of the carbon fiber reinforced plastic layer; (E) performing polishing processing to the metallic plating layer, after (D), using a polishing instrument with a count of 200 to 2000; and (F) manufacturing the fuel tank for use with the spacecraft by placing the carbon fiber reinforced plastic layer so that the surface having been subjected to the polishing processing is located on an inner side of the fuel tank, after (E).

In this method, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

According to the present invention, there is provided a method of manufacturing a fuel tank for use with a spacecraft, the fuel tank including a carbon fiber reinforced plastic layer, the method comprising: (D1) forming metallic plating layers on both surfaces, respectively, of the carbon fiber reinforced plastic layer, (E1) performing polishing processing to one of the metallic plating layers, after (D1), using a polishing instrument with a count of 200 to 2000;
and (F1) manufacturing the fuel tank for use with the spacecraft by placing the carbon fiber reinforced plastic layer so that the metallic plating layer having been subjected to the polishing processing is located on an inner side of the fuel tank, after (E1).

In this method, the inner surface of the fuel tank for use with the spacecraft (fuel tank for spacecraft) is smoothed. Even in a case where liquid oxygen is stored in the fuel tank for use with the spacecraft, resistance to ignition in a liquid oxygen ambience can be improved.

### Advantageous Effects of Invention

In accordance with a fuel tank for use with a spacecraft and a manufacturing method thereof, resistance to ignition in a liquid oxygen ambience can be improved.

### Brief Description of Drawings

Fig. 1 is a schematic view showing a state in which a fuel tank according to Embodiment 1 is placed inside a rocket.
Fig. 2 is a cross-sectional view of major constituents of the fuel tank of Fig. 1.
Fig. 3 is a schematic view showing the steps of a manufacturing method of the fuel tank according to Embodiment 1.
Fig. 4 is a cross-sectional view of major constituents of a fuel tank according to Modified Example 1 of Embodiment 1.
Fig. 5 is a schematic view showing the steps of a manufacturing method of the fuel tank according to Modified Example 1 of Embodiment 1.
Fig. 6 is a cross-sectional view of major constituents of a fuel tank according to Embodiment 2.
Fig. 7 is a schematic view showing the steps of a manufacturing method of the fuel tank according to Embodiment 2.
Fig. 8 is a cross-sectional view of major constituents of a fuel tank according to Embodiment 3.
Fig. 9 is a schematic view showing the steps of a manufacturing method of the fuel tank according to Embodiment 3.
Fig. 10 is a cross-sectional view of major constituents of a fuel tank according to Modified Example 1 of Embodiment 3.
Fig. 11 is a schematic view showing the steps of a manufacturing method of the fuel tank according to Modified Example 1 of Embodiment 3.

### Description of Embodiments

Hereinafter, the embodiments of the present invention will be described with reference to the drawings. Throughout the drawings, the same or corresponding constituents are designated by the same reference symbols, and will not be described in repetition. Also, throughout the drawings, constituents required to describe the invention are extracted and shown, while the other constituents are sometimes omitted. Further, the present invention is not limited to the embodiments described below.

### (Embodiment 1)

A fuel tank for use with a spacecraft (fuel tank for spacecraft) according to Embodiment 1 is a fuel tank for use with a spacecraft, the fuel tank being configured to store therein fuel for driving the spacecraft, the fuel tank comprising: a carbon fiber reinforced plastic layer and a metallic plating layer, wherein the carbon fiber reinforced plastic layer has a polished surface having been subjected to polishing processing, the polished surface being on an inner side of the fuel tank, and the metallic plating layer is provided on the polished surface.

In the fuel tank for use with the spacecraft according to Embodiment 1, the polishing processing is performed by use of a polishing instrument with a count of 200 to 2000.

In the fuel tank for use with the spacecraft according to Embodiment 1, the metallic plating layer may have a thickness of 100µm or less.

In the fuel tank for use with the spacecraft according to Embodiment 1, the metallic plating layer may be formed by performing non-electrolytic (electroless) nickel plating and then performing copper plating.

A method of manufacturing a fuel tank for use with a spacecraft, according to Embodiment 1, is a manufacturing method of a fuel tank for use with a spacecraft, the fuel tank including a carbon fiber reinforced plastic layer, the method comprising: (A) performing polishing processing to a surface of the carbon fiber reinforced plastic layer; (B) forming a metallic plating layer on the surface of the carbon fiber reinforced plastic layer, the surface having been subjected to the polishing processing, after (A), and (C) manufacturing the fuel tank for use with the spacecraft by placing the carbon fiber reinforced plastic layer so that the metallic plating layer is located on an inner side of the fuel tank, after (B).

In the method of manufacturing the fuel tank for use with the spacecraft according to Embodiment 1, the surface of the carbon fiber reinforced plastic layer is polished by use of a polishing instrument with a count of 200 to 2000.

In the method of manufacturing the fuel tank for use with the spacecraft according to Embodiment 1, in (B), the plating processing may be performed so that the metallic plating layer has a thickness of 100µm or less.

In the method of manufacturing the fuel tank for use with the spacecraft according to Embodiment 1, in (B), non-electrolytic (electroless) nickel plating may be performed and then copper plating may be performed.

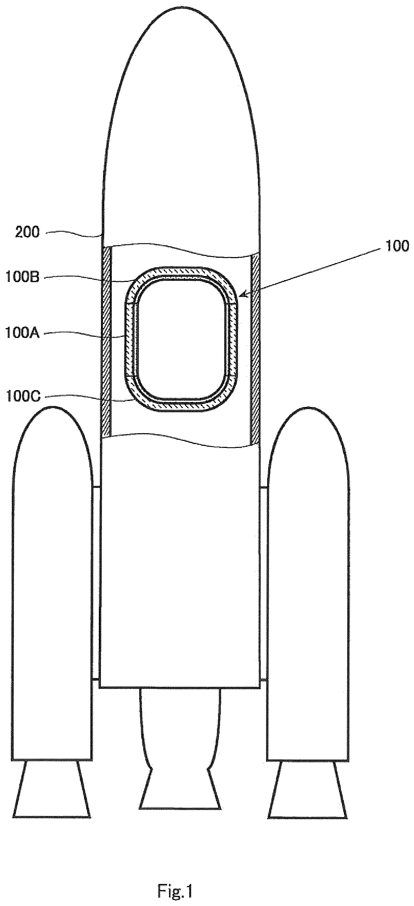

Hereinafter, an example of the fuel tank for use with the spacecraft (hereinafter will be simply referred to as a fuel tank) according to Embodiment 1 will be described with reference to Figs. 1 to 3.

### [Configuration of Fuel Tank]

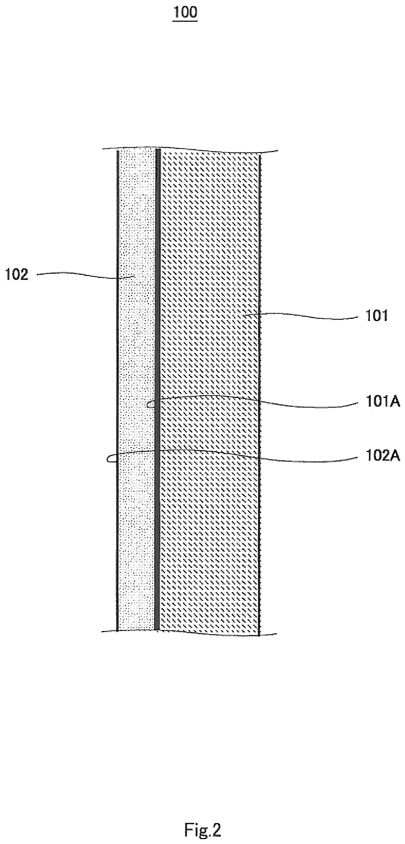

Fig. 1 is a schematic view showing a state in which a fuel tank according to Embodiment 1 is placed inside a rocket. Fig. 2 is a cross-sectional view of major constituents of the fuel tank of Fig. 1. Fig. 1 shows the internal structure (fuel tank) of the rocket, with a part of the rocket cut away.

As shown in Figs. 1 and 2, a fuel tank 100 according to Embodiment 1 is placed inside a rocket (spacecraft) 200, and is configured to store (reserve) therein liquid fuel (e.g., liquid oxygen or liquid hydrogen) with a low-temperature. The fuel tank 100 includes a carbon fiber reinforced plastic layer 101, and a metallic plating layer 102. In Embodiment 1, the fuel tank 100 includes a cylindrical body 100A, a first lid member 100B with a circular plate shape, which closes a first opening end of the body 100A, and a second lid member 100C with a circular plate shape, which closes a second opening end of the body 100A.

The carbon fiber reinforced plastic layer 101 has a surface 101A which is a polished surface having been subjected to polishing processing (treatment) on an inner side of the fuel tank 100 so that the surface 101A has a first predetermined surface roughness (degree). The surface 101A of the carbon fiber reinforced plastic layer 101 is provided with the metallic plating layer 102 formed by plating processing. A surface 102A of the metallic plating layer 102 forms the inner surface of the fuel tank 100.

As metal constituting the metallic plating layer 102, for example, at least one metal selected from a metal group including platinum, gold, silver, copper, nickel, chrome, zinc, tin, aluminum, and cadmium, or alloy of these metals may be used.

As the plating processing, non-electrolytic (electroless) plating may be performed, electroplating may be performed, or the non-electrolytic plating may be performed and then the electroplating may be performed. In Embodiment 1, non-electrolytic nickel plating is performed and then copper electroplating is performed.

To reduce the weight of the fuel tank 100, the thickness of the metallic plating layer 102 may be set to 100µm or less, or 50µm or less. Alternatively, to prevent a situation in which vaporized liquid fuel leaks to outside of the fuel tank 100 through the carbon fiber reinforced plastic layer 101, the thickness of the metallic plating layer 102 may be set to a value in a range of 10 to 20µm. Further, the metallic plating layer 102 may consist of a single plating layer or may include two or more plating layers.

### [Manufacturing Method of Fuel Tank]

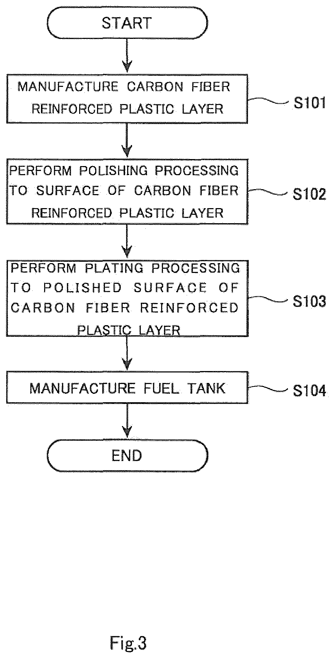

Fig. 3 is a schematic view showing the steps of a manufacturing method of the fuel tank according to Embodiment 1.

As shown in Fig. 3, initially, an operator or the like manufactures the carbon fiber reinforced plastic layer 101 of the fuel tank 100 (step S101). The carbon fiber reinforced plastic layer 101 is manufactured by a known manufacturing method of carbon fiber reinforced plastic.

Specifically, for example, the body 100A is manufactured in such a manner that prepreg clothes or prepreg sheets comprising carbon fibers which are impregnated with a phenol resin, a bismaleimide resin, a polyether ether ketone resin, a polyether ketone ketone resin, an epoxy resin or the like are laminated (stacked together), and a laminate with a cylindrical shape is hot-pressed or autoclaved. The first lid member 100B and the second lid member 100C are manufactured in such a manner that prepreg clothes or prepreg sheets impregnated with a resin are laminated (stacked together), and a laminate with a cylindrical shape is hot-pressed or autoclaved.

Then, the operator or the like performs polishing processing to the surface of the carbon fiber reinforced plastic layer 101 (to be precise, the body 100A, the first lid member 100B, and the second lid member 100C) manufactured in step S101 (step S102). Specifically, the operator or the like performs the polishing processing by use of a polishing (abrasive) instrument. The polishing instrument used may be as follows. To allow the surface 101A to have the first predetermined surface roughness (degree), sandpaper, a polishing cloth sheet, or a resin sheet coated with a polishing agent, which has a count of 200 or more may be used. To reduce time required for the polishing processing, sandpaper, a polishing cloth sheet, or a resin sheet coated with a polishing agent, which has a count of 2000 or less may be used, sandpaper or the like with a count of 1200 or less may be used, sandpaper or the like with a count of 1000 or less may be used, or sandpaper or the like with a count of 600 or less may be used.

At this time, the operator or the like may perform the polishing processing to the surface 101A of the carbon fiber reinforced plastic layer 101 by use of the sandpaper or the like so that the surface 101A has the first predetermined surface roughness while measuring the surface roughness by use of a surface roughness measurement unit. Further, parameters of a direction, a pressure, and time of application of the sandpaper or the like, which allow the surface 101A to have the first predetermined surface roughness, may be found in advance by conducting an experiment, and the operator or the like may perform the polishing processing according to the parameters.

Note that the polishing processing may be different from the polishing processing performed by use of the sandpaper or the like. For example, chemical polishing processing or buffing processing may be performed. The surface roughness (degree) may be measured by use of, for example, a contact-type roughness meter, an atomic force microscope, a white-light interferometer, or a laser microscope.

Next, the operator or the like performs the plating processing to form the metallic plating layer 102 on the surface 101A of the carbon fiber reinforced plastic layer 101, the surface 101A having been subjected to the polishing processing (step S103). Specifically, the operator or the like may perform the non-electrolytic (electroless) nickel plating and then perform copper electroplating. At this time, the operator or the like may perform the plating processing so that the metallic plating layer 102 has a thickness of 100µm or less, or 50µm or less.

Although in Embodiment 1, the operator or the like performs the non-electrolytic plating and then performs the electroplating, this is merely exemplary. For example, the operator or the like may perform only the non-electrolytic plating, or only the electroplating.

Next, the operator or the like manufactures the fuel tank 100 (assembles: step S104). Specifically, the operator or the like assembles the fuel tank 100 in such a manner that the operator or the like places the first lid member 100B and the second lid member 100C in an opening of the body 100A, and joins them to each other by a suitable joining means (e.g., adhesive).

In the fuel tank 100 according to Embodiment 1 configured as described above, the metallic plating layer 102 is formed on the surface 101A of the carbon fiber reinforced plastic layer 101, the surface 101A having been subjected to the polishing processing so that the surface 101A has the first predetermined surface roughness. In this structure, the surface 102A of the metallic plating layer 102 has a surface roughness which is close to or less than the first predetermined surface roughness. In this way, the inner surface of the fuel tank 100 is smoothed.

For example, even in a case where an impact or the like is externally applied to the fuel tank 100 storing the liquid oxygen therein, conversion of motion energy into heat energy can be suppressed in the inner surface of the fuel tank 100, and thus resistance to ignition in a liquid oxygen ambience can be improved.

For example, a test for resistance to ignition of the fuel tank 100 may be conducted by use of ABMA impact test machine according to a test method standard (D2512-95) of ASTM (American Society for Testing and Materials).

In the fuel tank 100 according to Embodiment 1, the thickness of the metallic plating layer 102 is set to 100µm or less, which is less than that of the conventional fuel tank. In this structure, the weight of the fuel tank 100 according to Embodiment 1 can be reduced, compared to the conventional fuel tank.

Although in the fuel tank 100 according to Embodiment 1, the surface 101A of the carbon fiber reinforced plastic layer 101 is the polished surface, this is exemplary. For example, each of the surface 101A of the carbon fiber reinforced plastic layer 101 and the surface 102A of the metallic plating layer 102 may be polished so that each of the carbon fiber reinforced plastic layer 101 and the metallic plating layer 102 has the polished surface. In this case, after the metallic plating layer 102 is formed in step S103, the surface 102A of the metallic plating layer 102 may be polished by use of a polishing instrument.

### [Modified Example 1]

Next, a fuel tank for use with a spacecraft according to Modified Example 1 of Embodiment 1 will be described.

The fuel tank for use with the spacecraft according to Modified Example 1 of Embodiment 1 further includes a metallic plating layer covering a surface of the carbon fiber reinforced plastic layer, the surface being on an outer side of the fuel tank.

A method of manufacturing a fuel tank for use with a spacecraft, according to Modified Example 1 of Embodiment 1, is a manufacturing method of a fuel tank for use with a spacecraft, the fuel tank including a carbon fiber reinforced plastic layer, the method comprising: (A) performing polishing processing to a surface of the carbon fiber reinforced plastic layer; (B2) forming metallic plating layers on the surface of the carbon fiber reinforced plastic layer, the surface having been subjected to the polishing processing, and a surface of the carbon fiber reinforced plastic layer, the surface being on a side opposite to the surface having been subjected to the polishing processing, after (A), and (C2) manufacturing the fuel tank for use with the spacecraft by placing the carbon fiber reinforced plastic layer so that the metallic plating layer formed on the surface of the carbon fiber reinforced plastic layer, the surface having been subjected to the polishing processing, is located on an inner side of the fuel tank, after (B2).

In the method of manufacturing the fuel tank for use with the spacecraft according to Modified Example 1 of Embodiment 1, in (A), the surface of the carbon fiber reinforced plastic layer is polished by use of a polishing instrument with a count of 200 to 2000.

In the method of manufacturing the fuel tank for use with the spacecraft according to Modified Example 1 of Embodiment 1, in (B2), the plating processing may be performed so that the metallic plating layer has a thickness of 100µm or less.

In the method of manufacturing the fuel tank for use with the spacecraft according to Modified Example 1 of Embodiment 1, in (B2), non-electrolytic (electroless) nickel plating may be performed and then copper plating may be performed.

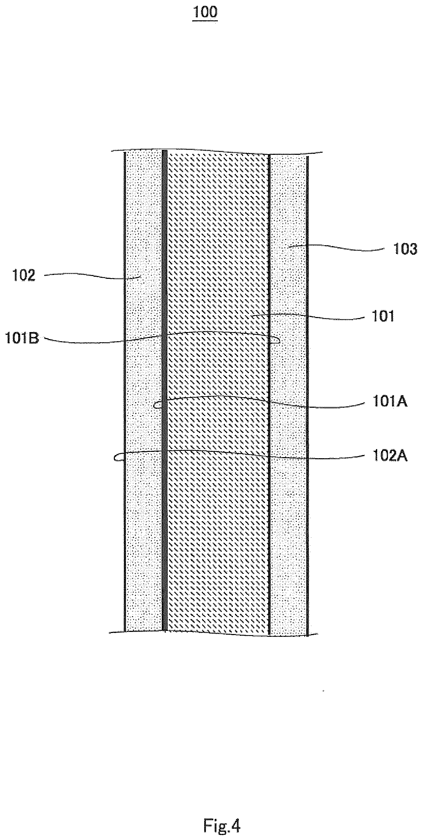

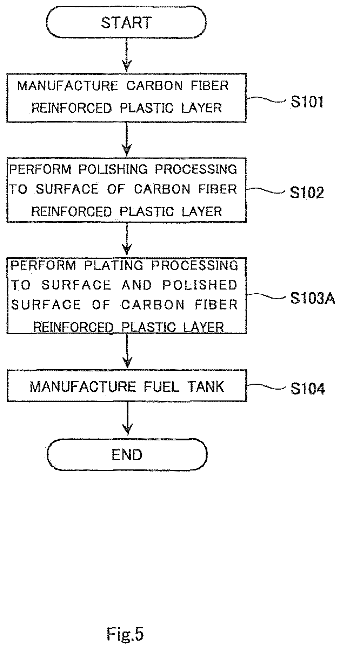

Hereinafter, an example of the fuel tank for use with the spacecraft (hereinafter will be simply referred to as a fuel tank) according to Modified Example 1 will be described with reference to Figs. 4 and 5.

### [Configuration of Fuel Tank]

Fig. 4 is a cross-sectional view of major constituents of the fuel tank according to Modified Example 1 of Embodiment 1.

As shown in Fig. 4, the configuration of the fuel tank 100 according to Modified Example 1 is basically the same as that of the fuel tank 100 according to Embodiment 1, and is different from the same in that a metallic plating layer 103 is formed on a surface 101B of the carbon fiber reinforced plastic layer 101, the surface being on an outer side of the fuel tank 100.

Since the configuration of the metallic plating layer 103 is the same as that of the metallic plating layer 102 of the fuel tank 100 according to Embodiment 1, and detailed description thereof is omitted.

### [Manufacturing Method of Fuel Tank]

Fig. 5 is a schematic view showing the steps of a manufacturing method of the fuel tank according to Modified Example 1 of Embodiment 1.

As shown in Fig. 5, the manufacturing method of the fuel tank 100 according to Modified Example 1 is basically the same as the manufacturing method of the fuel tank 100 according to Embodiment 1, and is different from the same in that step S103A is performed instead of step S103.

Specifically, the operator or the like forms the metallic plating layer 102 on the polished surface 101A of the carbon fiber reinforced plastic layer 101, and forms the metallic plating layer 103 on the surface 101B of the carbon fiber reinforced plastic layer 101. More specifically, the operator or the like performs the non-electrolytic (electroless) nickel plating and then perform copper electroplating. At this time, the operator or the like may perform the plating processing so that the metallic plating layer 102 or the metallic plating layer 103 has a thickness of 100µm or less, or 50µm or less.

Although in Modified Example 1, the operator or the like performs the non-electrolytic plating and then performs the electroplating, this is merely exemplary. For example, the operator or the like may perform only the non-electrolytic plating, or only the electroplating.

The fuel tank 100 according to Modified Example 1 configured as described above can obtain the advantages as those of the fuel tank 100 according to Embodiment 1.

In the fuel tank 100 according to Modified Example 1, the metallic plating layer 103 is formed on the outer side of the fuel tank 100. In a case where the metallic plating layer 102 has a slight flaw, or a part of the metallic plating layer 102 is not plated , leakage of a fuel gas can be reduced.

### (Embodiment 2)

A fuel tank for use with a spacecraft (fuel tank for spacecraft) according to Embodiment 2 is a fuel tank for use with a spacecraft, the fuel tank being configured to store therein fuel for driving the spacecraft, the fuel tank comprising: a carbon fiber reinforced plastic layer and a metallic plating layer, wherein the carbon fiber reinforced plastic layer has a polished surface having been subjected to polishing processing, the polished surface being on an inner side of the fuel tank, and the metallic plating layer is provided on a surface of the carbon fiber reinforced plastic layer, the surface being on an outer side of the fuel tank.

In the fuel tank for use with the spacecraft according to Embodiment 2, the polishing processing is performed by use of a polishing instrument with a count of 200 to 2000.

In the fuel tank for use with the spacecraft according to Embodiment 2, the metallic plating layer may have a thickness of 100µm or less.

In the fuel tank for use with the spacecraft according to Embodiment 2, the metallic plating layer may be formed by performing non-electrolytic (electroless) nickel plating and then performing copper plating.

A method of manufacturing a fuel tank for use with a spacecraft, according to Embodiment 2, is a manufacturing method of a fuel tank for use with a spacecraft, the fuel tank including a carbon fiber reinforced plastic layer, the method comprising: (A) performing polishing processing to a surface of the carbon fiber reinforced plastic layer; (B1) forming a metallic plating layer on a surface of the carbon fiber reinforced plastic layer, the surface being on a side opposite to the surface having been subjected to the polishing processing, after (A), and (C1) manufacturing the fuel tank for use with the spacecraft by placing the carbon fiber reinforced plastic layer so that the metallic plating layer is located on an outer side of the fuel tank, after (B1).

In the method of manufacturing the fuel tank for use with the spacecraft according to Embodiment 2, in (A), the surface of the carbon fiber reinforced plastic layer is polished by use of a polishing instrument with a count of 200 to 2000.

In the method of manufacturing the fuel tank for use with the spacecraft according to Embodiment 2, in (B1), the plating processing may be performed so that the metallic plating layer has a thickness of 100µm or less.

In the method of manufacturing the fuel tank for use with the spacecraft according to Embodiment 2, in (B1), non-electrolytic (electroless) nickel plating may be performed and then copper plating may be performed.

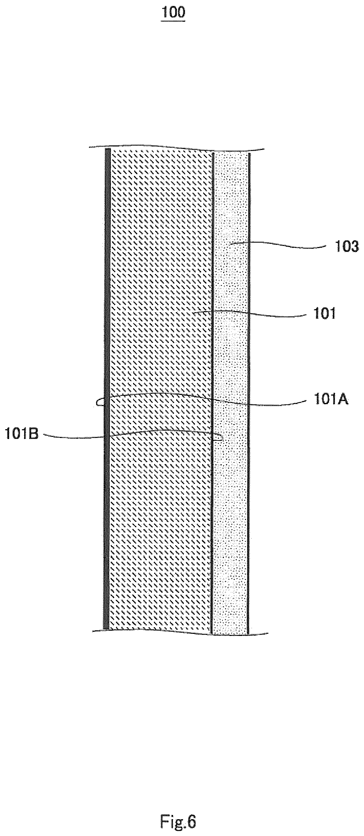

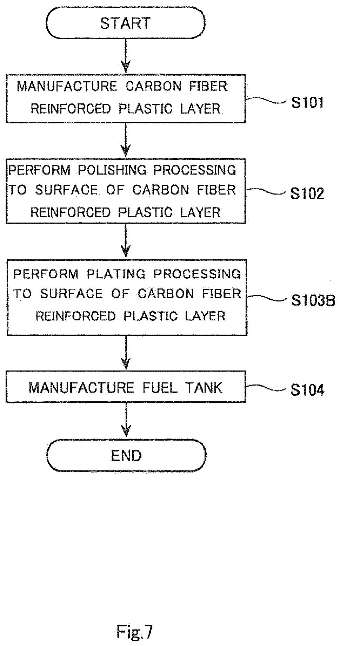

Hereinafter, an example of the fuel tank for use with the spacecraft (hereinafter will be simply referred to as a fuel tank) according to Embodiment 2 will be described with reference to Figs. 6 and 7.

### [Configuration of Fuel Tank]

Fig. 6 is a cross-sectional view of major constituents of a fuel tank according to Embodiment 2.

As shown in Fig. 6, the configuration of the fuel tank 100 according to Embodiment 2 is basically the same as that of the fuel tank 100 according to Embodiment 1, and is different from the same in that the metallic plating layer 103 is formed on an outer side of the fuel tank 100, instead of the metallic plating layer 102 formed on an inner side of the fuel tank 100. Since the configuration of the metallic plating layer 103 is the same as that of the metallic plating layer 103 of the fuel tank 100 according to Modified Example 1 of Embodiment 1, and detailed description thereof is omitted.

### [Manufacturing Method of Fuel Tank]

Fig. 7 is a schematic view showing the steps of a manufacturing method of the fuel tank according to Embodiment 2.

As shown in Fig. 7, the manufacturing method of the fuel tank 100 according to Embodiment 2 is basically the same as the manufacturing method of the fuel tank 100 according to Embodiment 1, and is different from the same in that step S103B is performed instead of step S103. Specifically, the operator or the like forms the metallic plating layer 103 on the surface 101B of the carbon fiber reinforced plastic layer 101. The forming method of the metallic plating layer 103 is the same as that of the metallic plating layer 103 of the fuel tank 100 according to Modified Example 1 of Embodiment 1, and detailed description thereof is omitted.

In the fuel tank 100 according to Embodiment 2 configured as described above, the surface 101A of the carbon fiber reinforced plastic layer 101 has been subjected to the polishing processing so that the surface 101A has the first predetermined surface roughness. In other words, the inner surface of the fuel tank 100 is smoothed.

In this structure, even in a case where an impact or the like is externally applied to the fuel tank 100 storing the liquid oxygen therein, conversion of motion energy into heat energy can be suppressed in the inner surface of the fuel tank 100, and thus resistance to ignition in a liquid oxygen ambience can be improved.

In the fuel tank 100 according to Embodiment 2, the thickness of the metallic plating layer 103 is set to 100µm or less, which is less than that of the conventional fuel tank. In this structure, the weight of the fuel tank 100 according to Embodiment 2 can be reduced, compared to the conventional fuel tank.

### (Embodiment 3)

A fuel tank for use with a spacecraft (fuel tank for spacecraft) according to Embodiment 2 is a fuel tank for use with a spacecraft, the fuel tank being configured to store therein fuel for driving the spacecraft, the fuel tank comprising: a carbon fiber reinforced plastic layer and a metallic plating layer covering a surface of the carbon fiber reinforced plastic layer, the surface being on an inner side of the fuel tank, wherein the metallic plating layer has a polished surface having been subjected to polishing processing, the polished surface being on an inner side of the fuel tank.

In the fuel tank for use with the spacecraft according to Embodiment 3, the polishing processing may be buffing processing.

In the fuel tank for use with the spacecraft according to Embodiment 3, the polishing processing is performed by use of a polishing instrument with a count of 200 to 2000.

In the fuel tank for use with the spacecraft according to Embodiment 3, the metallic plating layer may have a thickness of 100µm or less.

In the fuel tank for use with the spacecraft according to Embodiment 3, the metallic plating layer may be formed by performing non-electrolytic (electroless) nickel plating and then performing copper plating.

A method of manufacturing a fuel tank for use with a spacecraft, according to Embodiment 3, is a manufacturing method of a fuel tank for use with a spacecraft, the fuel tank including a carbon fiber reinforced plastic layer, the method comprising: (D) forming a metallic plating layer on a surface of the carbon fiber reinforced plastic layer, (E) performing polishing processing to the metallic plating layer, after (D), and (F) manufacturing the fuel tank for use with the spacecraft by placing the carbon fiber reinforced plastic layer so that the surface having been subjected to the polishing processing is located on an inner side of the fuel tank, after (E).

In the method of manufacturing the fuel tank for use with the spacecraft according to Embodiment 3, in (D), the plating processing may be performed so that the metallic plating layer has a thickness of 100µm or less.

In the method of manufacturing the fuel tank for use with the spacecraft according to Embodiment 3, in (D), non-electrolytic nickel plating may be performed and then copper plating may be performed.

In the method of manufacturing the fuel tank for use with the spacecraft according to Embodiment 3, in (E), the metallic plating layer may be buffed (buffing processing may be performed to the metallic plating layer).

In the method of manufacturing the fuel tank for use with the spacecraft according to Embodiment 3, in (E), the metallic plating layer is polished by use of a polishing instrument with a count of 200 to 2000.

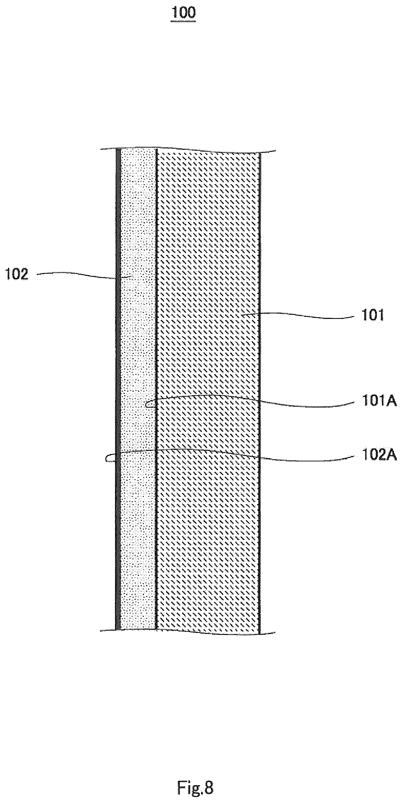

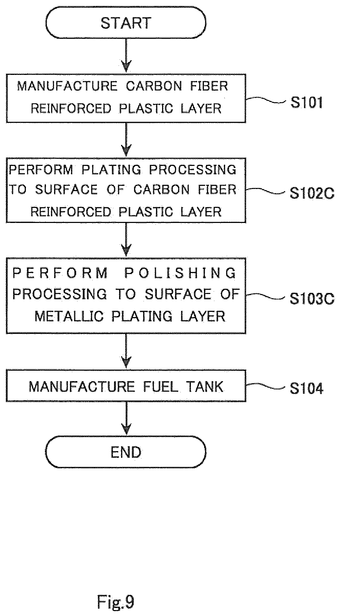

Hereinafter, an example of the fuel tank for use with the spacecraft (hereinafter will be simply referred to as a fuel tank) according to Embodiment 3 will be described with reference to Figs. 8 and 9.

### [Configuration of Fuel Tank]

Fig. 8 is a cross-sectional view of major constituents of the fuel tank according to Embodiment 3.

As shown in Fig. 8, the configuration of the fuel tank 100 according to Embodiment 3 is basically the same as that of the fuel tank 100 according to Embodiment 1, and is different from the same in that the surface 102A of the metallic plating layer 102 is a polished surface having been subjected to polishing processing (the surface 101A of the carbon fiber reinforced plastic layer 101 is not the polished surface).

The surface 102A of the metallic plating layer 102 has been subjected to the polishing processing to have a second predetermined surface roughness (degree). As the polishing processing, for example, the buffing processing, the chemical polishing processing, or the polishing processing by use of a polishing instrument may be used. The polishing instrument used is as follows. To allow the surface 101A to have the second predetermined surface roughness, sandpaper, a polishing cloth sheet, or a resin sheet coated with a polishing agent, which has a count of 200 or more may be used. To reduce time required for the polishing processing, sandpaper, a polishing cloth sheet, or a resin sheet coated with a polishing agent, which has a count of 2000 or less may be used, sandpaper or the like with a count of 1200 or less may be used, sandpaper or the like with a count of 1000 or less may be used, or sandpaper or the like with a count of 600 or less may be used.

The operator or the like may perform the polishing processing to the surface 102A by use of, for example, a buffing processing instrument or sandpaper, while measuring the surface roughness so that the surface 102A has the second predetermined surface roughness. The operator or the like may perform the polishing processing so that the metallic plating layer 102 has a thickness of 10 to 100µm. The operator or the like may perform the polishing processing up to the surface 101A of the carbon fiber reinforced plastic layer 101 by scraping the metallic plating layer 102. The second predetermined surface roughness may be equal to or may be different from the first predetermined surface roughness.

Further, after the polishing processing, plating processing may be performed again. In this case, the plating processing may be performed so that the metallic plating layer 102 has a thickness of 100µm or less.

### [Manufacturing Method of Fuel Tank]

Fig. 9 is a schematic view showing the steps of a manufacturing method of the fuel tank according to Embodiment 3.

As shown in Fig. 9, in the manufacturing method of the fuel tank 100 according to Embodiment 3, the operator or the like manufactures the carbon fiber reinforced plastic layer 101 of the fuel tank 100 (step S101), as in the manufacturing method of the fuel tank 100 according to Embodiment 1.

Then, the operator or the like performs the plating processing to form the metallic plating layer 102 on the surface 101A of the carbon fiber reinforced plastic layer 101 (step S102C). Specifically, the operator or the like may perform the non-electrolytic nickel plating and then perform copper electroplating. At this time, the operator or the like may perform the plating processing so that the metallic plating layer 102 has a thickness of 100µm or less, or may perform the plating processing to form the metallic plating layer 102 with a larger thickness and then may reduce the thickness of the metallic plating layer 102 to 100µm or less by the polishing processing which is performed later.

Although in Embodiment 3, the operator or the like performs the non-electrolytic plating and then performs the electroplating, this is merely exemplary. For example, the operator or the like may perform only the non-electrolytic plating, or only the electroplating.

Then, the operator or the like performs the polishing processing to the surface 102A of the metallic plating layer 102 formed in step S102C (step S103C). Specifically, for example, the operator or the like polishes the surface 102A of the metallic plating layer 102 by use of a buffing processing instrument.

In the polishing processing, the operator or the like may polish the surface 102A of the metallic plating layer 102 by use of the sandpaper or the like. In the polishing processing, the operator or the like may polish the metallic plating layer 102 so that the metallic plating layer 102 has a thickness of 10 to 100µm, or may polish the metallic plating layer 102 so that the metallic plating layer 102 has a thickness of 10 to 50µm. Further, the operator or the like may perform the polishing processing up to the surface 101A of the carbon fiber reinforced plastic layer 101 by scraping the metallic plating layer 102. In this case, the operator or the like may perform the plating processing again to form the metallic plating layer 102.

Next, the operator or the like manufactures the fuel tank 100 (assembles: step S104).

In the fuel tank 100 according to Embodiment 3 configured as described above, the metallic plating layer 102 is formed to have the second predetermined surface roughness (degree). Therefore, the inner surface of the fuel tank 100 is smoothed.

In the above-described structure, even in a case where an impact or the like is externally applied to the fuel tank 100 storing the liquid oxygen therein, conversion of motion energy into heat energy can be suppressed in the inner surface of the fuel tank 100, and thus resistance to ignition in a liquid oxygen ambience can be improved.

In the fuel tank 100 according to Embodiment 3, the thickness of the metallic plating layer 102 is set to 100µm or less, which is less than that of the conventional fuel tank. In this structure, the weight of the fuel tank 100 according to Embodiment 3 can be reduced, compared to the conventional fuel tank.

### [Modified Example 1]

Next, a fuel tank for use with a spacecraft according to Modified Example 1 of Embodiment 3 will be described.

In the fuel tank for use with the spacecraft according to Modified Example 1 of Embodiment 3, the metallic plating layer is formed on the outer side of the fuel tank in addition to the inner side of the fuel tank.

A method of manufacturing a fuel tank for use with a spacecraft, according to Modified Example 1 of Embodiment 3, is a manufacturing method of a fuel tank for use with a spacecraft, the fuel tank including a carbon fiber reinforced plastic layer, the method comprising: (D1) forming metallic plating layers on both surfaces, respectively, of the carbon fiber reinforced plastic layer, (E1) performing polishing processing to one of the metallic plating layers, after (D1), and (F) manufacturing the fuel tank for use with the spacecraft by placing the carbon fiber reinforced plastic layer so that the metallic plating layer having been subjected to the polishing processing is located on an inner side of the fuel tank, after (E1).

In the method of manufacturing the fuel tank for use with the spacecraft according to Modified Example 1 of Embodiment 3, in (D1), the plating processing may be performed so that the metallic plating layer has a thickness of 100µm or less.

In the method of manufacturing the fuel tank for use with the spacecraft according to Modified Example 1 of Embodiment 3, in (D1), non-electrolytic nickel plating may be performed and then copper plating may be performed.

In the method of manufacturing the fuel tank for use with the spacecraft according to Modified Example 1 of Embodiment 3, in (E1), the metallic plating layer may be buffed (buffing processing may be performed to the metallic plating layer).

In the method of manufacturing the fuel tank for use with the spacecraft according to Modified Example 1 of Embodiment 3, in (E1), the metallic plating layer is polished by use of a polishing instrument with a count of 200 to 2000.

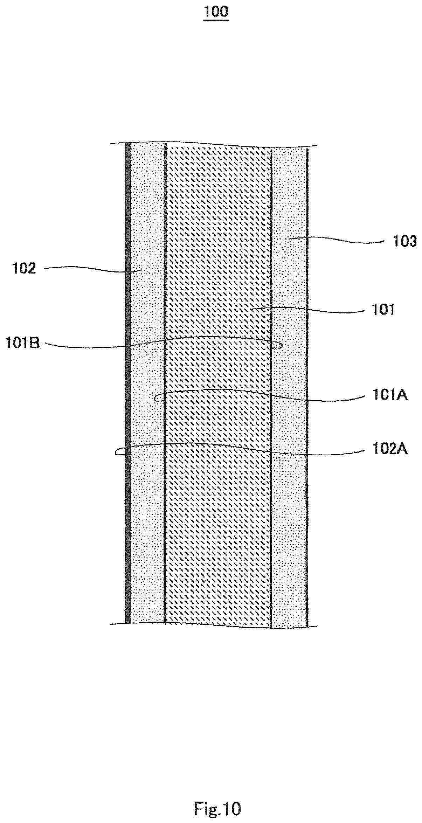

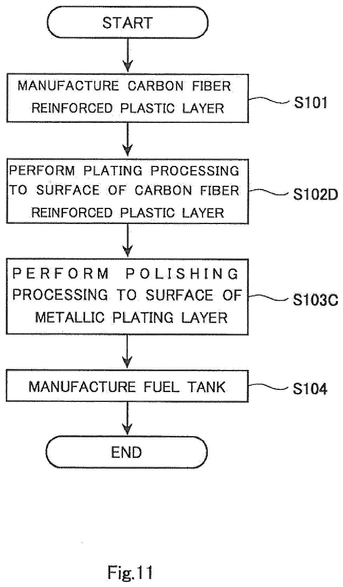

Hereinafter, an example of the fuel tank for use with the spacecraft (hereinafter will be simply referred to as the fuel tank) according to Modified Example 1 will be described with reference to Figs. 10 and 11.

### [Configuration of Fuel Tank]

Fig. 10 is a cross-sectional view of major constituents of the fuel tank according to Modified Example 1 of Embodiment 3.

As shown in Fig. 10, the configuration of the fuel tank 100 according to Modified Example 1 is basically the same as that of the fuel tank 100 according to Embodiment 3, and is different from the same in that the metallic plating layer 103 is formed on the surface 101B on the outer side of the fuel tank 100. The configuration of the metallic plating layer 103 is the same as that of the metallic plating layer 103 of the fuel tank 100 according to Modified Example 1 of Embodiment 1, and detailed description thereof is omitted.

### [Manufacturing Method of Fuel Tank]

Fig. 11 is a schematic view showing the steps of a manufacturing method of the fuel tank according to Modified Example 1 of Embodiment 3.

As shown in Fig. 11, the manufacturing method of the fuel tank 100 according to Modified Example 1 is basically the same as the manufacturing method of the fuel tank 100 according to Embodiment 3, and is different from the same in that step S102D is performed instead of step S102C.

Specifically, the operator or the like forms the metallic plating layer 102 on the surface 101A of the carbon fiber reinforced plastic layer 101, and forms the metallic plating layer 103 on the surface 101B of the carbon fiber reinforced plastic layer 101. The forming method of the metallic plating layer 103 is the same as that of the metallic plating layer 103 of the fuel tank 100 according to Modified Example 1 of Embodiment 1, and detailed description thereof is omitted.

The fuel tank 100 according to Modified Example 1 configured as described above can obtain the advantages as those of the fuel tank 100.

In the fuel tank 100 according to Modified Example 1, the metallic plating layer 103 is formed on the outer side of the fuel tank 100. In a case where the metallic plating layer 102 has a slight flaw, or a part of the metallic plating layer 102 is not plated, leakage of a fuel gas can be reduced.

Numerous modifications and alternative embodiments of the present invention will be apparent to those skilled in the art in view of the foregoing description. Accordingly, the description is to be construed as illustrative only, and is provided for the purpose of teaching those skilled in the art the best mode of conveying out the invention. The details of the structure and/or function may be varied substantially without departing from the scope of the appended claims.

### Industrial Applicability

A fuel tank for use with a spacecraft and a manufacturing method thereof, of the present invention are able to improve resistance to ignition in a liquid oxygen ambience, and therefore are useful.

### Reference Signs List

- 100: fuel tank

- 100A: body
- 100B: first lid member
- 100C: second lid member
- 101: carbon fiber reinforced plastic layer
- 101A: surface
- 101B: surface
- 102: metallic plating layer
- 102A: surface
- 103: metallic plating layer
- 200: rocket

## Claims

1. A fuel tank for use with a spacecraft, the fuel tank being configured to store therein fuel for driving the spacecraft, the fuel tank comprising:
a carbon fiber reinforced plastic layer and a metallic plating layer,
wherein the carbon fiber reinforced plastic layer has a polished surface having been subjected to polishing processing, the polished surface being on an inner side of the fuel tank,
wherein the metallic plating layer is provided on the polished surface, and
wherein the polishing processing is performed by use of a polishing instrument with a count of 200 to 2000.

2. A fuel tank for use with a spacecraft, the fuel tank being configured to store therein fuel for driving the spacecraft, the fuel tank comprising:
a carbon fiber reinforced plastic layer and a metallic plating layer,
wherein the carbon fiber reinforced plastic layer has a polished surface having been subjected to polishing processing, the polished surface being on an inner side of the fuel tank,
wherein the metallic plating layer is provided on an outer side of the fuel tank, and
wherein the polishing processing is performed by use of a polishing instrument with a count of 200 to 2000.

3. The fuel tank for use with the spacecraft, according to claim 1 or 2, wherein the metallic plating layer has a thickness of 100 µm or less.

4. The fuel tank for use with the spacecraft, according to any one of claims 1 to 3,
wherein the metallic plating layer is formed by performing non-electrolytic nickel plating and then performing copper plating.

5. A fuel tank for use with a spacecraft, the fuel tank being configured to store therein fuel for driving the spacecraft, the fuel tank comprising:
a carbon fiber reinforced plastic layer; and
a metallic plating layer covering a surface of the carbon fiber reinforced plastic layer, the surface being on an inner side of the fuel tank,
wherein the metallic plating layer has a polished surface having been subjected to polishing processing, the polished surface being on the inner side of the fuel tank, and
wherein the polishing processing is performed by use of a polishing instrument with a count of 200 to 2000.

6. The fuel tank for use with the spacecraft, according to claim 5,
wherein the polishing processing is buffing processing.

7. The fuel tank for use with the spacecraft, according to any one of claims 5 or 6,
wherein the metallic plating layer has a thickness of 100 µm or less.

8. The fuel tank for use with the spacecraft, according to any one of claims 5 to 7,
wherein the metallic plating layer is formed by performing non-electrolytic nickel plating and then performing copper plating.

9. A method of manufacturing a fuel tank for use with a spacecraft, the fuel tank including a carbon fiber reinforced plastic layer, the method comprising:
(A) performing polishing processing to a surface of the carbon fiber reinforced plastic layer using a polishing instrument with a count of 200 to 2000;
(B) forming a metallic plating layer on the surface of the carbon fiber reinforced plastic layer, the surface having been subjected to the polishing processing, after (A); and
(C) manufacturing the fuel tank for use with the spacecraft by placing the carbon fiber reinforced plastic layer so that the metallic plating layer is located on an inner side of the fuel tank, after (B).

10. A method of manufacturing a fuel tank for use with a spacecraft, the fuel tank including a carbon fiber reinforced plastic layer, the method comprising:
(A) performing polishing processing to a surface of the carbon fiber reinforced plastic layer using a polishing instrument with a count of 200 to 2000;
(B1) forming a metallic plating layer on a surface of the carbon fiber reinforced plastic layer, the surface being on a side opposite to the surface having been subjected to the polishing processing, after (A), and
(C1) manufacturing the fuel tank for use with the spacecraft by placing the carbon fiber reinforced plastic layer so that the metallic plating layer is located on an outer side of the fuel tank, after (B1).

11. A method of manufacturing a fuel tank for use with a spacecraft, the fuel tank including a carbon fiber reinforced plastic layer, the method comprising:
(D) forming a metallic plating layer on a surface of the carbon fiber reinforced plastic layer;
(E) performing polishing processing to the metallic plating layer, after (D), using a polishing instrument with a count of 200 to 2000, and
(F) manufacturing the fuel tank for use with the spacecraft by placing the carbon fiber reinforced plastic layer so that the surface having been subjected to the polishing processing is located on an inner side of the fuel tank, after (E).

## Patentansprüche

1. Kraftstofftank zur Verwendung mit einem Raumfahrzeug, wobei der Kraftstofftank konfiguriert ist, um darin Kraftstoff zum Antreiben des Raumfahrzeugs zu speichern, wobei der Kraftstofftank Folgendes umfasst:
eine kohlefaserverstärkte Kunststoffschicht und eine metallische Plattierungsschicht,
wobei die kohlefaserverstärkte Kunststoffschicht eine polierte Oberfläche aufweist, die einer Polierverarbeitung unterzogen wurde, wobei sich die polierte Oberfläche auf einer Innenseite des Kraftstofftanks befindet,
wobei die metallische Plattierungsschicht auf der polierten Oberfläche vorgesehen ist, und
wobei die Polierverarbeitung unter Verwendung eines Polierinstruments mit einer Körnung von 200 bis 2000 durchgeführt wird.

2. Kraftstofftank zur Verwendung mit einem Raumfahrzeug, wobei der Kraftstofftank konfiguriert ist, um darin Kraftstoff zum Antreiben des Raumfahrzeugs zu speichern, wobei der Kraftstofftank Folgendes umfasst:
eine kohlefaserverstärkte Kunststoffschicht und eine metallische Plattierungsschicht,
wobei die kohlefaserverstärkte Kunststoffschicht eine polierte Oberfläche aufweist, die einer Polierverarbeitung unterzogen wurde, wobei sich die polierte Oberfläche auf einer Innenseite des Kraftstofftanks befindet,
wobei die metallische Plattierungsschicht auf einer Außenseite des Kraftstofftanks vorgesehen ist, und
wobei die Polierverarbeitung unter Verwendung eines Polierinstruments mit einer Körnung von 200 bis 2000 durchgeführt wird.

3. Kraftstofftank zur Verwendung mit einem Raumfahrzeug nach Anspruch 1 oder 2, wobei die metallische Plattierungsschicht eine Dicke von 100 µm oder weniger aufweist.

4. Kraftstofftank zur Verwendung mit einem Weltraumfahrzeug nach einem der Ansprüche 1 bis 3, wobei die metallische Plattierungsschicht mittels Durchführen einer nichtelektrolytischen Nickelplattierung und anschließender Durchführung einer Kupferplattierung gebildet wird.

5. Kraftstofftank zur Verwendung mit einem Raumfahrzeug, wobei der Kraftstofftank konfiguriert ist, um darin Kraftstoff zum Antreiben des Raumfahrzeugs zu speichern, wobei der Kraftstofftank Folgendes umfasst:
eine kohlefaserverstärkte Kunststoffschicht; und
eine metallische Plattierungsschicht, die eine Oberfläche der kohlefaserverstärkten Kunststoffschicht bedeckt, wobei sich die Oberfläche auf einer Innenseite des Kraftstofftanks befindet,
wobei die metallische Plattierungsschicht eine polierte Oberfläche aufweist, die einer Polierverarbeitung unterzogen wurde, wobei sich die polierte Oberfläche auf der Innenseite des Kraftstofftanks befindet, und
wobei die Polierverarbeitung unter Verwendung eines Polierinstruments mit einer Körnung von 200 bis 2000 durchgeführt wird.

6. Kraftstofftank zur Verwendung mit einem Raumfahrzeug nach Anspruch 5, wobei es sich bei der Polierverarbeitung um eine Schwabbelbearbeitung handelt.

7. Kraftstofftank zur Verwendung mit einem Raumfahrzeug nach einem der Ansprüche 5 oder 6, wobei die metallische Plattierungsschicht eine Dicke von 100 µm oder weniger aufweist.

8. Kraftstofftank zur Verwendung mit einem Weltraumfahrzeug nach einem der Ansprüche 5 bis 7, wobei die metallische Plattierungsschicht mittels Durchführen einer nichtelektrolytischen Nickelplattierung und anschließender Durchführung einer Kupferplattierung gebildet wird.

9. Verfahren zum Herstellen eines Kraftstofftanks zur Verwendung mit einem Raumfahrzeug, wobei der Kraftstofftank eine kohlefaserverstärkte Kunststoffschicht beinhaltet, wobei das Verfahren Folgendes umfasst:
(A) Durchführen einer Polierverarbeitung an einer Oberfläche der kohlefaserverstärkten Kunststoffschicht unter Verwendung eines Polierinstruments mit einer Körnung von 200 bis 2000;
(B) Bilden einer metallischen Plattierungsschicht auf der Oberfläche der kohlefaserverstärkten Kunststoffschicht, wobei die Oberfläche der Polierverarbeitung unterzogen wurde, nach Schritt (A); und
(C) Herstellen des Kraftstofftanks zur Verwendung mit einem Raumfahrzeug durch Anordnen der kohlefaserverstärkten Kunststoffschicht derart, dass die metallische Plattierungsschicht auf einer Innenseite des Kraftstofftanks angeordnet ist, nach Schritt (B).

10. Verfahren zum Herstellen eines Kraftstofftanks zur Verwendung mit einem Raumfahrzeug, wobei der Kraftstofftank eine kohlefaserverstärkte Kunststoffschicht beinhaltet, wobei das Verfahren Folgendes umfasst:
(A) Durchführen einer Polierverarbeitung an einer Oberfläche der kohlefaserverstärkten Kunststoffschicht unter Verwendung eines Polierinstruments mit einer Körnung von 200 bis 2000;
(B1) Bilden einer metallischen Plattierungsschicht auf einer Oberfläche der kohlefaserverstärkten Kunststoffschicht, wobei die Oberfläche der Polierverarbeitung unterzogen wurde, nach Schritt (A), und
(C1) Herstellen des Kraftstofftanks zur Verwendung mit dem Raumfahrzeug durch Anordnen der kohlefaserverstärkten Kunststoffschicht derart, dass die metallische Plattierungsschicht auf einer Außenseite des Kraftstofftanks angeordnet ist, nach Schritt (B1).

11. Verfahren zum Herstellen eines Kraftstofftanks zur Verwendung mit einem Raumfahrzeug, wobei der Kraftstofftank eine kohlefaserverstärkte Kunststoffschicht beinhaltet, wobei das Verfahren Folgendes umfasst:
(D) Bilden einer metallischen Plattierungsschicht auf einer Oberfläche der kohlefaserverstärkten Kunststoffschicht;
(E) Durchführen einer Polierverarbeitung an der metallischen Plattierungsschicht nach Schritt (D) unter Verwendung eines Polierinstruments mit einer Körnung von 200 bis 2000, und
(F) Herstellen des Kraftstofftanks zur Verwendung mit einem Raumfahrzeug durch Anordnen der kohlefaserverstärkten Kunststoffschicht derart, dass die Oberfläche, die der Polierverarbeitung unterzogen wurde, auf einer Innenseite des Kraftstofftanks angeordnet ist, nach Schritt (E).

## Revendications

1. Réservoir de carburant destiné à un engin spatial, le réservoir de carburant étant conçu pour renfermer du carburant servant à faire fonctionner l'engin spatial, le réservoir de carburant comprenant :
une couche de plastique renforcé de fibres de carbone et une couche de placage métallique ;
ladite couche de plastique renforcé de fibres de carbone présentant une surface polie ayant subi un traitement de polissage, la surface polie étant sur un côté intérieur du réservoir de carburant,
ladite couche de placage métallique étant prévue sur la surface polie, et
ledit traitement de polissage étant réalisé à l'aide d'un instrument de polissage d'une valeur de 200 à 2000.

2. Réservoir de carburant destiné à un engin spatial, le réservoir de carburant étant conçu pour renfermer du carburant servant à faire fonctionner l'engin spatial, le réservoir de carburant comprenant :
une couche de plastique renforcé de fibres de carbone et une couche de placage métallique ;
ladite couche de plastique renforcé de fibres de carbone présentant une surface polie ayant subi un traitement de polissage, la surface polie étant sur un côté intérieur du réservoir de carburant,
ladite couche de placage métallique étant prévue sur un côté extérieur du réservoir de carburant, et
ledit traitement de polissage étant réalisé à l'aide d'un instrument de polissage d'une valeur de 200 à 2000.

3. Réservoir de carburant destiné à un engin spatial selon la revendication 1 ou 2, dans lequel la couche de placage métallique a une épaisseur de 100 µm ou moins.

4. Réservoir de carburant destiné à un engin spatial selon l'une quelconque des revendications 1 à 3, dans lequel la couche de placage métallique est formée par réalisation d'un nickelage non électrolytique suivi d'un cuivrage.

5. Réservoir de carburant destiné à un engin spatial, le réservoir de carburant étant conçu pour renfermer du carburant servant à faire fonctionner l'engin spatial, le réservoir de carburant comprenant :
une couche de plastique renforcé de fibres de carbone, et
une couche de placage métallique recouvrant une surface de la couche de plastique renforcé de fibres de carbone, la surface étant sur un côté intérieur du réservoir de carburant ;
ladite couche de placage métallique présentant une surface polie ayant subi un traitement de polissage, la surface polie étant sur le côté intérieur du réservoir de carburant, et
ledit traitement de polissage étant réalisé à l'aide d'un instrument de polissage d'une valeur de 200 à 2000.

6. Réservoir de carburant destiné à un engin spatial selon la revendication 5, ledit traitement de polissage étant un traitement de lustrage.

7. Réservoir de carburant destiné à un engin spatial selon l'une quelconque des revendications 5 et 6, dans lequel la couche de placage métallique a une épaisseur de 100 µm ou moins.

8. Réservoir de carburant destiné à un engin spatial selon l'une quelconque des revendications 5 à 7, dans lequel la couche de placage métallique est formée par réalisation d'un nickelage non électrolytique suivi d'un cuivrage.

9. Procédé de fabrication d'un réservoir de carburant destiné à un engin spatial, le réservoir de carburant comportant une couche de plastique renforcé de fibres de carbone, le procédé comprenant :
(A) la réalisation d'un traitement de polissage sur une surface de la couche de plastique renforcé de fibres de carbone à l'aide d'un instrument de polissage d'une valeur de 200 à 2000,
(B) la formation d'une couche de placage métallique sur la surface de la couche de plastique renforcé de fibres de carbone, la surface ayant été soumise au traitement de polissage, après (A), et
(C) la fabrication du réservoir de carburant destiné à un engin spatial, en plaçant la couche de plastique renforcé de fibres de carbone de façon que la couche de placage métallique soit située sur un côté intérieur du réservoir de carburant, après (B).

10. Procédé de fabrication d'un réservoir de carburant destiné à un engin spatial, le réservoir de carburant comportant une couche de plastique renforcé de fibres de carbone, le procédé comprenant :
(A) la réalisation d'un traitement de polissage sur une surface de la couche de plastique renforcé de fibres de carbone à l'aide d'un instrument de polissage d'une valeur de 200 à 2000,
(B1) la formation d'une couche de placage métallique sur une surface de la couche de plastique renforcé de fibres de carbone, la surface étant sur un côté opposé à la surface ayant été soumise au traitement de polissage, après (A), et
(C1) la fabrication du réservoir de carburant destiné à un engin spatial, en plaçant la couche de plastique renforcé de fibres de carbone de façon que la couche de placage métallique soit située sur un côté extérieur du réservoir de carburant, après (B1).

11. Procédé de fabrication d'un réservoir de carburant destiné à un engin spatial, le réservoir de carburant comportant une couche de plastique renforcé de fibres de carbone, le procédé comprenant :
(D) la formation d'une couche de placage métallique sur une surface de la couche de plastique renforcé de fibres de carbone,
(E) la réalisation d'un traitement de polissage sur la couche de placage métallique, après (D), à l'aide d'un instrument de polissage d'une valeur de 200 à 2000, et
(F) la fabrication du réservoir de carburant destiné à un engin spatial, en plaçant la couche de plastique renforcé de fibres de carbone de façon que la surface ayant été soumise au traitement de polissage soit située sur un côté intérieur du réservoir de carburant, après (E).
